(19) Europäisches Patentamt European Patent Office Office européen des brevets

(11) **EP 1 401 900 B1**

(12) **EUROPEAN PATENT SPECIFICATION**

(45) Date of publication and mention of the grant of the patent:
**08.10.2008 Bulletin 2008/41**

(51) Int Cl.:
**C08F 265/04** *(2006.01)*    **C08F 236/18** *(2006.01)*
**C08F 2/00** *(2006.01)*

(21) Application number: **02740504.2**

(22) Date of filing: **23.04.2002**

(86) International application number:
**PCT/EP2002/004532**

(87) International publication number:
**WO 2002/096965 (05.12.2002 Gazette 2002/49)**

(54) **PROCESS FOR PRODUCING FUNCTIONALIZED POLYCHLOROPRENE LATICES**

VERFAHREN ZUR HERSTELLUNG VON POLYCHLOROPREN-LATICES MIT FUNKTIONELLEN GRUPPEN

PROCEDE DE PRODUCTION DE LATEX DE POLYCHLOROPRENE FONCTIONNALISES

(84) Designated Contracting States:
**AT BE CH CY DE DK ES FI FR GB GR IE IT LI LU MC NL PT SE TR**

(30) Priority: **31.05.2001 FR 0107118**

(43) Date of publication of application:
**31.03.2004 Bulletin 2004/14**

(73) Proprietor: **Pidilite Industries Limited**
**Nariman Point**
**Mumbai 400021 (IN)**

(72) Inventors:
• **SAUTEREY, François**
**F-38560 Champ sur Drac (FR)**

• **THENOZ, Françoise**
**F-69300 Caluire (FR)**
• **GUYOT, Alain**
**F-69006 Lyon (FR)**

(74) Representative: **De Gregori, Antonella et al**
**Ing. Barzano' & Zanardo Milano S.p.A.**
**Via Borgonuovo 10**
**20121 Milano (IT)**

(56) References cited:
**EP-A- 0 495 365**        **GB-A- 2 060 662**
**US-A- 5 767 214**

**Description**

The various applications of chloroprene rubber (CR) include that of being marketed for the production of solvent adhesives.

For ecological, health and safety reasons, there are calls, in numerous fields of application, for solvent adhesives to be substituted by aqueous adhesives.

A large number of patents consequently disclose the means for obtaining polychloroprene latices in aqueous suspension or emulsion form to meet such a need.

The majority of these patents involve polychloroprene latex functionalization, with the aim of improving certain properties, such as the adhesive strengths, the cohesive strengths and the heat stability.

The copolymerization of chloroprene with one or more comonomers is one of the most widely employed means of functionalization. The most commonly used of these comonomers are 2,3-dichlorobutadiene and $\alpha,\beta$-unsaturated acids and esters.

The copolymerization of chloroprene with $\alpha,\beta$-unsaturated acids makes it possible, by increasing the charge density of the particles, to improve the stability of the latices for a pH range greater than the $pK_a$ of the $\alpha,\beta$-unsaturated acid employed. Furthermore, the carboxyl groups which they introduce into the final polymer represent favoured sites for crosslinking which are believed to react with the metal oxides employed in the formulation of latices and thus to contribute to improving the heat stability of the combinations.

The copolymerization of chloroprene with $\alpha,\beta$-unsaturated esters makes it possible, in particular, to improve the adhesive bonding properties of polychloroprene adhesives on supports which are difficult to adhesively bond, such as SBR rubbers or PVC.

Generally, it is well known that random copolymerization decreases the stereoregularity of the sequences and thereby the cohesive strengths of the polychloroprene adhesives prepared, in direct relation to their crystalline properties.

It is also well known that $\alpha,\beta$-unsaturated acids and esters exhibit, in radical polymerization, a much lower reactivity than that of chloroprene. Several processes are disclosed in the literature for overcoming this disadvantage.

In batchwise polymerization, it is recommended to maximize the conversion of the monomers, which at the same time promotes gel formation. The batchwise process can be carried out either at low temperature, but the polymerization time is then very long and damaging to industrial productivity, or at moderate temperature, at the expense of the cohesive strengths of the final adhesive. Based on a temperature rise programme, the Du Pont de Nemours patent US 5 399 625 (1995) makes it possible to solve the difference in reactivity between chloroprene and the comonomers employed, without, however, finding an answer to the gel problem.

Recourse to a semi-continuous process (Enichem Elastomères, France, US 6 034 173, 2000; Bayer, EP 495 365, 1992) makes possible the addition of a deficit of the most reactive monomer and makes it possible to thus promote the incorporation, in the polychloroprene chains, of the monomer of lower reactivity. However, the fraction by volume of monomer in the particles is, in this case, unfavourable to the production of a latex with a controlled level of gel, contrary to the requirements demanded in the field of adhesives.

In conclusion, the current state of the art of the functionalization of polychloroprene latices involves processes which result either in an ineffective functionalization or in the production of a latex with a high content of gel. In both cases, the latices furthermore exhibit low cohesive strengths in the adhesive bonding test.

The Applicant Company claims a two-stage process which makes it possible to uniformly functionalize chloroprene latices while controlling their final level of gel and without detrimentally affecting their cohesive strengths during adhesive bonding applications.

A subject-matter of the present invention is a process, in at least two stages, for the preparation of functionalized polychloroprene latices obtained by copolymerization of chloroprene and of a mixture of comonomers comprising $\alpha,\beta$-unsaturated acids and/or esters, in aqueous emulsion in the presence of radical initiators, characterized in that:

the first stage consists of the polymerization of the mixture of $\alpha,\beta$-unsaturated acids and/or esters, in combination or not in combination with up to 15% by weight of chloroprene monomer, thus making it possible to obtain (co)polymer particles with a diameter of between 45 and 80 nm;

the second stage consists of the polymerization of chloroprene in the presence of particles of (co)polymer obtained during the first stage at a pH below the $pK_a$ of the surfactant(s) employed in the first stage, the number of particles at the end of the second stage being equal to or very little different from that measured at the end of the first stage; the final polymer having a content of poly ($\alpha,\beta$-unsaturated acids + esters) of between 5% and 40% by weight and a content of gel of less than 25%.

The first stage consists in polymerizing, in the aqueous phase, under radical conditions, a mixture of monomers composed of $\alpha,\beta$-unsaturated acids and/or esters, in combination or not in combination with chloroprene. The latex thus obtained is introduced as vessel heel (seed) at the beginning of the second stage, which consists in polymerizing chloroprene, in combination or not in combination with other comonomers, in the aqueous phase at low temperature, under radical conditions.

The seed is composed of a mixture of $\alpha,\beta$-unsaturated acids and esters of formula $R^1CH=C(R^2)COOR^3$, where $R^1$ is a saturated or unsaturated hydrocarbonaceous chain and comprises from 1 to 18 carbon atoms or $R^1=H$; $R^2$ is chosen from H and $CH_3$; and $R^3$ is chosen from H and a $C_1$ to $C_{18}$ hydrocarbonaceous radical.

Preferably, $R^1CH=C(R^2)COOR^3$ is chosen from methyl methacrylate ($R^1=H$, $R^2=CH_3$, $R^3=CH_3$; butyl acrylate ($R^1=H$, $R^2=H$, $R^3=C_4$); or methacrylic acid ($R^1=H$, $R^2=CH_3$, $R^3=H$).

The content of $\alpha,\beta$-unsaturated acids is between 0 and 15% by weight of the mixture of monomers constituting the seed, preferably between 3 and 8%.

The content of $\alpha,\beta$-unsaturated esters is between 85 and 100% by weight of the mixture of monomers constituting the seed, preferably between 92 and 97%.

The seed may also comprise up to 15% by weight of chloroprene monomer, preferably between 5 and 10%.

The polymerization temperature of the first stage is between 30 and 90°C, preferably between 50 and 80°C. It is preferable to polymerize the $\alpha,\beta$-unsaturated acids and esters at high temperature, for reasons of productivity.

The reaction pH of the first stage is between 2 and 8, preferably between 3 and 6.

The anionic surfactants, in combination or not in combination with nonionic surfactants, are those conventionally used in emulsion polymerization in the pH range between 2 and 8. Anionic surfactants with a $pK_a$ greater than or equal to the polymerization pH of the second stage are preferred. Mention may be made of sulphonate, sulphate, and some carboxyl surfactants, such as maleic surfactants carrying a hydrocarbonaceous chain.

The monomers constituting the seed are polymerized by addition of a conventional initiating system, such as hydrogen peroxide, organic peroxides, cumyl peroxide, dibenzoyl peroxide, alkali metal or ammonium ferricyanides and, preferably, alkali metal or ammonium persulphates.

The molecular weight of the chains is conventionally adjusted by the use of conventional transfer agents, such as mercaptans.

The conversion of the monomers charged in the first stage is between 70 and 100%, preferably between 85 and 95%.

The mean diameter of the particles of the seed is between 45 and 80 nm, preferably between 55 and 65 nm. For particle diameters of less than 45 nm, destabilization of the latex occurs during the second stage because of an excessively large number of particles. For particle diameters of greater than 80 nm, the kinetics of polymerization are excessively slow and harmful to the productivity.

The level of solids in the seed is between 10 and 40%.

Before the second stage, it is preferable to swell the seed by adding to it a fraction of the mixture of monomers charged in the second stage. The swelling takes place at a temperature of between 5 and 25°C, preferably between 10 and 15°C. Under these temperature conditions, the swelling time is between a few minutes and several hours. This well known technique makes it possible to promote the diffusion of the monomer(s) within the particles and is accompanied by an increase in the mean diameter of the particles.

The fraction of monomer(s) used for the swelling is between 0 and 10% of the mixture of monomers charged in the second stage.

The second stage consists in polymerizing chloroprene, in combination or not in combination with other comonomers, under radical conditions, at a temperature of between 5 and 30°C, on the seed prepared as described above, in proportions such that the content of poly($\alpha,\beta$-unsaturated acids and/or esters) in the final polymer varies between 5 and 40%.

It is necessary for the second stage to be carried out at low temperature, between 5 and 30°C, preferably between 7 and 25°C. This makes it possible to avoid gel formation while conferring high cohesive strengths on the final adhesive latex.

The comonomers used in combination are those conventionally charged in copolymerization with chloroprene, including 2,3-dichlorobutadiene, vinylaromatic compounds, such as styrene, vinyltoluenes and vinylnaphthalenes, acrylic and methacrylic acids and their ester and nitrile derivatives, such as ethyl acrylate, butadiene, isoprene, 2,3-dichloro-1,3-butadiene and 2,3-dimethyl-1,3-butadiene, and vinyl ethers and ketones, such as methyl vinyl ether, vinyl acetate and methyl vinyl ketone.

The monomer mixture of the second stage can either be charged in full at the beginning of the reaction or can be added in shots or continuously. In the case where it is added continuously throughout the reaction, it is essential to adjust the kinetics of addition so as to maintain an instantaneous conversion of less than or equal to 70%. For reasons of simplicity, the mixture of monomers of the second stage is preferably added in shots.

The number of particles at the end of the second stage is different by at most $\pm$ 20% from that of the beginning of the second stage and is conventionally between $5 \times 10^{16}$ particles/l and $10^{18}$ particles/l. The uniform functionalization of the final latex involves retaining a constant number or not very variable number of particles over the whole of the second stage. To achieve this, the surfactants charged in the second stage are nonionic surfactants preferably added continuously, so as to avoid any renucleation while making possible the stabilization of the growing particles. Furthermore, it is essential for the polymerization pH of the second stage to be less than the $pK_a$ of the surfactant(s) employed in the first stage.

The second polymerization stage is initiated conventionally in the presence of free radical generators, such as hydrogen peroxide, organic peroxides, cumyl peroxide, dibenzoyl peroxide, alkali metal or ammonium ferricyanides and, preferably, alkali metal or ammonium persulphates.

The molecular weight of the chains is adjusted during the second stage by the use of conventional transfer agents, such as mercaptans or xanthogens.

The final conversion of the chloroprene and of the comonomers optionally used in combination is between 80 and 100%, preferably between 90 and 100% for reasons of productivity.

The content of poly($\alpha,\beta$-unsaturated acids and/or esters) in the final polymer varies between 5 and 40%, preferably between 10 and 30%. The level of gel in the latices is less than 25%, preferably less than 10%.

The process described above makes it possible to obtain polychloroprene latices functionalized by acid and/or ester groups which are stable, which have a high level of solids, which have a low content of gel and which exhibit high cohesive strengths, with an increase in productivity due to the two-stage process.

Study of the latices by transmission electron microscopy confirms the uniformity of the functionalization, demonstrated by the production of latices composed of composite particles in which the polychloroprene and poly($\alpha,\beta$-unsaturated acid and/or ester) phases coexist.

The latices prepared according to the claimed process exhibit improved adhesive bonding characteristics on nonporous supports, such as SBR rubbers.

They can advantageously be used in the glue and adhesive industry, more particularly in the footwear industry for the adhesive bonding of soles to uppers.

### Example 1A

A seed is obtained by polymerization, at 70°C and under a nitrogen atmosphere, of 4.6 parts by mass of methyl methacrylate, of 4.6 parts by mass of butyl acrylate, of 0.3 part by mass of methacrylic acid, of 0.5 part by mass of chloroprene, of 78 parts by mass of deionized water, of 0.34 part by mass of a maleic surfactant carrying a saturated and linear $C_{16}$ hydrocarbonaceous chain (Sinnoester HMP, sold by Sidobre Sinnova, $pK_a$ = 5), of 0.37 part by mass of sodium hydrogencarbonate and of 0.035 part by mass of n-dodecyl mercaptan. The polymerization is initiated by the addition of 0.09 part by mass of sodium persulphate. The polymerization is halted at a conversion of between 70 and 100% by cooling the reaction mixture to 12°C. The level of solid and the conversion are determined by gravimetric analysis. The diameter of the seed particles is obtained by dynamic light scattering at a constant angle. The dynamic light scattering measurements are carried out on a Coulter N4 Plus device.

### Examples 1B to 1G

Various seeds are prepared according to the procedure described in Example 1A, with the exception that the composition of the monomer mixture is varied.

|  | 1A | 1B | 1C | 1D | 1E | 1F | Comparative 1G |
|---|---|---|---|---|---|---|---|
| MMA[(a)] | 4.6 | 4.85 | 9.2 | 4.6 | 8.2 | 4.6 | 4.6 |
| BuA[(a)] | 4.6 | 4.85 | 0 | 3.6 | 0 | 4.3 | 4.0 |
| MAA[(a)] | 0.3 | 0.3 | 0.3 | 0.3 | 0.3 | 0.6 | 0.9 |
| CP[(a)] | 0.5 | 0 | 0.5 | 1.5 | 1.5 | 0.5 | 0.5 |
| Level of solids (%) | 10.1 | 10.9 | 12.1 | 10.9 | 11.4 | 11.4 | 9.9 |
| Conversion (%) | 80.9 | 88.5 | 98.7 | 88.3 | 92.5 | 96.6 | 73.8 |
| Diameter of the particles (nm) | 61 | 55 | 58 | 56 | 59 | 53 | 91 |
| [(a)] The abbreviations MMA, BuA, MAA and CP respectively denote methyl methacrylate, butyl acrylate, methacrylic acid and chloroprene; the amounts are expressed as parts by mass. | | | | | | | |

Depending on the desired functionalization, that is to say the amount and the quality of the desired functional groups, and depending on the glass transition temperature of the targeted seed, it is possible to vary the composition of the seed while remaining within the claimed range of particle sizes.

**Examples 2A to 2C**

Various seeds are prepared according to the protocol described in Example 1A. The pH of the seeds is lowered to 5 by addition of a 10% solution of acetic acid in water. The seeds are subsequently swollen for 30 minutes at 12°C in the presence of 3% by weight of the mixture of monomers charged in the second stage. The remainder of the monomer fraction of the second stage, composed solely of chloroprene, is added in 4 shots over one hour, at regular time intervals. The respective amounts of seed and of chloroprene charged in the second stage are such that the final polymer comprises 10% by weight of poly ($\alpha,\beta$-unsaturated acid and/or ester) polymer and 90% of polychloroprene. The polymerization is initiated by addition, as a shot, of 7 g of sodium persulphate and by continuous addition of an aqueous sodium dithionite solution. Control of the molar masses is provided by the use of 0.23 part by mass of n-dodecyl mercaptan per 100 parts of chloroprene charged. Stabilization of the growing particles is provided by the continuous addition over 2 hours of an aqueous solution of a nonionic surfactant, isotridecanol carrying 30 ethylene oxide units (Emulan TO3070, sold by BASF).

The stability of the latices is estimated after filtration through a 100 mesh cloth. The total amount of coagulum is weighed and expressed in the form of a level of coagulum, with respect to the expected theoretical amount of polymer. The level of gel in the latices is estimated according to the method described' below. A latex layer with a thickness of 0.5 mm is produced on a glass plate using an applicator. After drying for 24 h at ambient temperature, a dry polymer film is obtained, from which a mass $M_1$ is removed. The latter is placed in a calibrated metal cloth basket (diameter of the holes: 100 mesh), itself placed in a beaker. The beaker is subsequently filled with toluene, in order to make possible the complete immersion of the polymer, for 24 hours at ambient temperature. The insoluble portion of the polymer remains in the basket, whereas the soluble fraction diffuses through the meshwork of the screen. The determination, by evaporation, of the amount of polymer dissolved in the solvent makes it possible to decide on the fraction by mass of insolubles or level of gel according to the following formula:

$$\text{Level of gel (\%)} = \frac{m_{initial} - m_{dissolved}}{m_{initial}}$$

where $m_{initial}$: mass of polymer initially immersed in the solvent
$m_{dissolved}$: mass of polymer dissolved in the solvent

|  | 2A | Comparative 2B | Comparative 2C |
|---|---|---|---|
| Initial diameter of the seed particles (nm) | 61 | 39 | 91 |
| Diameter of the seed particles after swelling (nm) | 68 | 44 | 98 |
| Time necessary to obtain 90% conversion in the second stage | 4h 50 | 2h 30 | >24 h |
| Stability of the final latex (level of coagulum) | stable (<1%) | unstable (>10%) | stable (<1%) |
| Level of gel in the toluene (%) | 7% | not measured | 5% |

For particle diameters of less than 45 nm, destabilization of the latex occurs during the second stage because of an excessively large number of particles. For particle diameters of greater than 80 nm, the kinetics of polymerization are excessively slow and are harmful to the productivity. The content of gel in the latices is less than 25% in all cases.

**Example 3A**

A functionalized polychloroprene latex is prepared according to the protocol described in Example 2A.

**Comparative Example 3B**

A functionalized polychloroprene latex is prepared according to the protocol described in Example 2A, with the exception that the pH of the seed is raised to 8.5 before the second stage by addition of an aqueous triethanolamine solution:

**Comparative Example 3C**

A functionalized polychloroprene latex is prepared according to the protocol described in Comparative Example 3B, with the exception that the nonionic surfactant Emulan TO3070 is replaced by a maleic surfactant carrying a saturated linear $C_{16}$ hydrocarbonaceous chain (Sinnoester HMP, sold by Sidobre-Sinnova).

| 3A | | Comparative 3B | | Comparative 3C | |
|---|---|---|---|---|---|
| Np seed = $3.11 \times 10^{17}$ particles [a] | | Np seed = $4.3 \times 10^{17}$ | | Np seed = $3.34 \times 10^{17}$ | |
| *Conversion (%)* | *Np Stage 2* | *Conversion (%)* | *Np Stage 2* | *Conversion (%)* | *Np Stage 2* |
| 7.8 | $3.08 \times 10^{17}$ | 16.9 | $6.1 \times 10^{17}$ | 9.4 | $4.25 \times 10^{17}$ |
| 28.1 | $3.11 \times 10^{17}$ | 35.3 | $7.1 \times 10^{17}$ | 30.2 | $5.81 \times 10^{17}$ |
| 77.6 | $3.24 \times 10^{17}$ | 71.4 | $7.15 \times 10^{17}$ | 48.5 | $5.99 \times 10^{17}$ |
| 91.1 | $3.14 \times 10^{17}$ | 96.7 | $8.1 \times 10^{17}$ | 67.1 | $6.35 \times 10^{17}$ |
| [a] Np represents the number of particles | | | | | |

The uniform functionalization of the final latex involves retaining a constant number or not very variable number of particles over the whole of the second stage. The use of an anionic surfactant (Comparative 3C) or of a nonionic surfactant at a pH greater than the $pK_a$ of the surfactant used to prepare the seed (Comparative 3B) results in a doubling in the number of particles, where as the latter remains constant over the whole of the second stage in the presence of a nonionic surfactant for a pH lower than the $pK_a$ of the surfactant used to prepare the seed (Example 3A).

**Example 4A**

A functionalized polychloroprene latex is prepared according to the protocol described in Example 2A.

**Comparative Example 4B**

A homopolychloroprene latex is prepared by emulsion polymerization at 10°C of 100 parts by mass of chloroprene, 0.1 part by mass of n-dodecyl mercaptan, 72 parts by mass of deionized water, 3.5 parts by mass of a carboxylic terpene surfactant (Grésinox 511, sold by DRT) and 0.88 part by mass of potassium hydroxide. The polymerization is initiated by continuous addition of aqueous sodium persulphate and sodium dithionite solutions and the conversion is carried out to a value of greater than or equal to 98%.

**Comparative Example 4C**

A chloroprene-based copolymer is obtained by polymerization, at 10°C and pH = 4.5, of 87 parts by mass of chloroprene, of 3 parts by mass of methacrylic acid, of 10 parts by mass of 2,3-DCBD, of 0.5 part by mass of n-dodecyl mercaptan, of 85 parts by mass of deionized water and of 5 parts by mass of a disodium salt of disulphonated mono- and didecyldiphenyl oxides (Dowfax 3B2, sold by Dow Chemicals).

**Comparative Example 4D**

A chloroprene-based copolymer is prepared according to the protocol described in Example 4C, with the exception of the composition of the monomer mixture, comprising 84 parts by mass of chloroprene, 6 parts by mass of methacrylic acid and 10 parts by mass of 2,3-DCBD.

The adhesive bonding properties of the latices obtained according to the synthetic protocols described in Examples 4A to 4D are evaluated in a peel test at ambient temperature on SBR rubbers in accordance with Standard ISO 868, relating to the adhesive bonding of the upper and sole parts of shoes (type-1 SBR: Shore A70 hardness). The supports are coated with adhesive using an applicator which makes possible the deposition of a latex film with a thickness of 0.35 mm. The latex film is dried for 15 minutes at ambient temperature before attaching the test specimens. The adhesive strengths are subsequently evaluated after the SBR test specimens have been in contact for 1 h and 7 days.

|  | Adhesive strengths after 1h (dN/cm) | Adhesive strengths after 7 days (dN/cm) |
|---|---|---|
| 4A | 2.4 | 3 |
| Comparative 4B | 1.8 | 0.6 |
| Comparative 4C | 0.2 | 0.9 |
| Comparative 4D | 0.3 | 0.7 |

The polychloroprene latices functionalized according to the claimed process (Example 4A) exhibit adhesive strengths on SBR rubber from 3 to 5 times greater than those obtained from a homopolychloroprene latex (Comparative 4B) or from polychloroprene latices functionalized according to the protocols known to date (Comparatives 4C and 4D).

**Claims**

1.  Process, in at least two stages, for the preparation of functionalized polychloroprene latices obtained by copolymerization of chloroprene and of a mixture of comonomers comprising $\alpha,\beta$-unsaturated acids and/or esters, in aqueous emulsion in the presence of radical initiators, **characterized in that:**

    the first stage consists of the polymerization of the mixture of $\alpha,\beta$-unsaturated acids and/or esters, in combination or not in combination with up to 15% by weight of chloroprene monomer, thus making it possible to obtain (co)polymer particles with a diameter of between 45 and 80 nm;
    the second stage consists of the polymerization of chloroprene at a temperature between 5 to 30°C in the presence of particles of (co)polymer obtained during the first stage at a pH below the $pK_a$ of the surfactant(s) employed in the first stage, the number of particles at the end of the second stage being equal to or very little different from that measured at the end of the first stage; the final polymer having a content of poly($\alpha,\beta$-unsaturated acids + esters) of between 5% and 40% by weight and a content of gel of less than 25%.

2.  Process according to Claim 1, **characterized in that** the temperature in the first stage is from 30°C to 90°C.

3.  Process according to Claim 2, **characterized in that** the temperature in the first stage is from 50°C to 80°C.

4.  Process according to Claim 1, **characterized in that** the pH of the first stage is between 2 and 8.

5.  Process according to Claim 4, **characterized in that** the pH of the first stage is between 3 and 6.

6.  Process according to Claim 1, **characterized in that** the content of $\alpha,\beta$-unsaturated esters is from 85% to 100% by weight of the mixture of monomers used in the first stage.

7.  Process according to Claim 6, **characterized in that** the content of $\alpha,\beta$-unsaturated esters is from 92% to 97% by weight of the mixture of monomers used in the first stage.

8.  Process according to Claim 1, **characterized in that** the content of $\alpha,\beta$-unsaturated acids is from 0% to 15% by weight of the mixture of monomers used in the first stage.

9.  Process according to the preceding claim, **characterized in that** the content of $\alpha,\beta$-unsaturated acids is from 3% to 8% by weight of the mixture of monomers used in the first stage.

10.  Process according to Claim 1, **characterized in that** the conversion of the monomers charged in the first stage is between 70% and 100%.

11.  Process according to Claim 10, **characterized in that** the conversion of the monomers charged in the first stage is between 85% and 95%.

12.  Process according to Claim 1, **characterized in that,** before the second stage, the particles of the (co)polymer are swollen by addition of a fraction up to 10% by weight of the mixture of monomers charged in the second stage.

**13.** Process according to Claim 1, **characterized in that** the temperature in the second stage is between 5°C and 30°C.

**14.** Process according to Claim 13, **characterized in that** the temperature in the second stage is between 7°C and 25°C.

**15.** Process according to Claim 1, **characterized in that** the chloroprene monomer ranges between 5 and 10% by weight.

**16.** Process according to Claim 1, **characterized in that** the final polymer has a content of poly($\alpha,\beta$-unsaturated acids + esters) of between 10% and 30% by weight and a content of gel of less than 10%.

**17.** Process according to Claim 1, **characterized in that** the number of particles at the end of the second stage is different by at most $\pm$ 20% from that of the beginning of the second stage.

**18.** Process according to Claim 1, **characterized in that** the $\alpha,\beta$-unsaturated acids and/or esters are chosen from methyl methacrylate, butyl acrylate and methacrylic acid.

**19.** Process according to Claim 1, **characterized in that** the surfactant(s) of the second stage are chosen from nonionic surfactants.


**Patentansprüche**

**1.** Verfahren, welches wenigstens zwei Schritte umfasst, zur Herstellung von funktionalisierten Polychloroprenlatices erhalten durch Copolymerisation von Chloropren und einer Mischung aus Comonomeren, welche $\alpha,\beta$-ungesättigte Säuren und/oder Ester enthält, in wässriger Emulsion in der Gegenwart von Radikalinitiatoren, **dadurch gekennzeichnet, dass:**

der erste Schritt aus der Polymerisation der Mischung aus $\alpha,\beta$-ungesättigten Säuren und/oder Estern in Mischung oder nicht in Mischung mit bis zu 15 Gew.-% Chloroprenmonomer besteht, was es folglich möglich macht, (Co)polymerpartikel mit einem Durchmesser zwischen 45 und 80 nm herzustellen; der zweite Schritt aus der Polymerisation von Chloropren bei einer Temperatur zwischen 5 und 30 °C in der Gegenwart von Partikeln aus (Co)polymer, welche während des ersten Schritts bei einem pH-Wert unterhalb des $pK_s$ des/der in dem ersten Schritt eingesetzten Tensid(e) erhalten worden sind, besteht, wobei die Anzahl der Partikel am Ende des zweiten Schritts gleich der oder sehr wenig unterschiedlich von der am Ende des ersten Schritts gemessenen ist, wobei das Endpolymer einen Gehalt an Poly($\alpha,\beta$-ungesättigten Säuren und Estern) zwischen 5 % und 40 Gew.-% und einen Gehalt an Gel von weniger als 25 % aufweist.

**2.** Verfahren nach Anspruch 1, **dadurch gekennzeichnet, dass** die Temperatur in dem ersten Schritt zwischen 30 °C und 90 °C beträgt.

**3.** Verfahren nach Anspruch 2, **dadurch gekennzeichnet, dass** die Temperatur in dem ersten Schritt zwischen 50 °C und 80 °C beträgt.

**4.** Verfahren nach Anspruch 1, **dadurch gekennzeichnet, dass** der pH-Wert des ersten Schritts zwischen 2 und 8 beträgt.

**5.** Verfahren nach Anspruch 4, **dadurch gekennzeichnet, dass** der pH-Wert des ersten Schritts zwischen 3 und 6 beträgt.

**6.** Verfahren nach Anspruch 1, **dadurch gekennzeichnet, dass** der Gehalt an $\alpha,\beta$-ungesättigten Estern zwischen 85 % und 100 Gew.-% der Monomerenmischung, welche in dem ersten Schritt eingesetzt wird, beträgt.

**7.** Verfahren nach Anspruch 6, **dadurch gekennzeichnet, dass** der Gehalt an $\alpha,\beta$-ungesättigten Estern zwischen 92 % und 97 Gew.-% der Monomerenmischung, welche in dem ersten Schritt eingesetzt wird, beträgt.

**8.** Verfahren nach Anspruch 1, **dadurch gekennzeichnet, dass** der Gehalt an $\alpha,\beta$-ungesättigten Säuren zwischen 0 % und 15 Gew.-% der Monomerenmischung, welche in dem ersten Schritt eingesetzt wird, beträgt.

**9.** Verfahren nach einem der vorhergehenden Ansprüche, **dadurch gekennzeichnet, dass** der Gehalt an $\alpha,\beta$-unge-

sättigten Säuren zwischen 3 % und 8 Gew.-% der Monomerenmischung, welche in dem ersten Schritt eingesetzt wird, beträgt.

10. Verfahren nach Anspruch 1, **dadurch gekennzeichnet, dass** die Umsetzung der in dem ersten Schritt eingeführten Monomere zwischen 70 % und 100 % beträgt.

11. Verfahren nach Anspruch 10, **dadurch gekennzeichnet, dass** die Umsetzung der in dem ersten Schritt eingeführten Monomere zwischen 85 % und 95 % beträgt.

12. Verfahren nach Anspruch 1, **dadurch gekennzeichnet, dass** die Partikel des (Co)polymers vor dem zweiten Schritt durch Zugabe von einer Fraktion bis zu 10 Gew.-% der Monomerenmischung, welche in dem zweiten Schritt zugeführt wird, gequollen werden.

13. Verfahren nach Anspruch 1, **dadurch gekennzeichnet, dass** die Temperatur in dem zweiten Schritt zwischen 5 °C und 30 °C beträgt.

14. Verfahren nach Anspruch 13, **dadurch gekennzeichnet, dass** die Temperatur in dem zweiten Schritt zwischen 7 °C und 25 °C beträgt.

15. Verfahren nach Anspruch 1, **dadurch gekennzeichnet, dass** das Chloprenmonomer in einem Bereich zwischen 5 und 10 Gew.-% vorliegt.

16. Verfahren nach Anspruch 1, **dadurch gekennzeichnet, dass** das Endpolymer einen Gehalt an Poly($\alpha,\beta$-ungesättigten Säuren + Estern) zwischen 10 % und 30 Gew.-% und einen Gelgehalt von weniger als 10 % enthält.

17. Verfahren nach Anspruch 1, **dadurch gekennzeichnet, dass** die Anzahl der Partikel am Ende des zweiten Schrittes um maximal $\pm$ 20 % von derjenigen an dem Beginn des zweiten Schritts verschieden ist.

18. Verfahren nach Anspruch 1, **dadurch gekennzeichnet, dass** die $\alpha,\beta$-ungesättigten Säuren und/oder Ester aus Methylmethacrylat, Butylacrylat und Methacrylsäure ausgewählt werden.

19. Verfahren nach Anspruch 1, **dadurch gekennzeichnet, dass** das/die Tensid(e) des zweiten Schritts aus nichtionischen Tensiden ausgewählt werden.

**Revendications**

1. Procédé, en au moins deux étapes, de préparation de latex de polychloroprène fonctionnalisés, obtenus par copolymérisation de chloroprène et d'un mélange de comonomères comprenant des acides et/ou esters $\alpha,\beta$-insaturés, en émulsion aqueuse et en présence d'amorceurs de polymérisation radicalaire, **caractérisé en ce que :**

   - la première étape consiste à faire polymériser le mélange d'acides et/ou esters $\alpha,\beta$-insaturés, combiné ou non avec jusqu'à 15 % en poids de monomère chloroprène, de manière à pouvoir obtenir des particules de polymère ou de copolymère de 45 à 80 nm de diamètre ;
   - et la deuxième étape consiste à faire polymériser du chloroprène, à une température de 5 à 30 °C, en présence des particules de polymère ou de copolymère obtenues lors de la première étape, à un pH inférieur au p$K_a$ du ou des tensioactif(s) employé(s) dans la première étape, le nombre de particules étant, à la fin de cette deuxième étape, égal au nombre de particules mesuré à la fin de la première étape ou très peu différent de celui-ci ;

   et donnant un polymère final dont la teneur en poly(acides + esters $\alpha,\beta$-insaturés) vaut de 5 à 40 % en poids et dont la teneur en gel vaut moins de 25 %.

2. Procédé conforme à la revendication 1, **caractérisé en ce que,** lors de la première étape, la température vaut de 30 à 90 °C.

3. Procédé conforme à la revendication 2, **caractérisé en ce que,** lors de la première étape, la température vaut de 50 à 80 °C.

**4.** Procédé conforme à la revendication 1, **caractérisé en ce que,** lors de la première étape, le pH vaut de 2 à 8.

**5.** Procédé conforme à la revendication 4, **caractérisé en ce que,** lors de la première étape, le pH vaut de 3 à 6.

**6.** Procédé conforme à la revendication 1, **caractérisé en ce que** la quantité d'esters $\alpha,\beta$-insaturés présente dans le mélange de monomères utilisé dans la première étape représente de 85 à 100 % du poids de ce mélange.

**7.** Procédé conforme à la revendication 6, **caractérisé en ce que** la quantité d'esters $\alpha,\beta$-insaturés présente dans le mélange de monomères utilisé dans la première étape représente de 92 à 97 % du poids de ce mélange.

**8.** Procédé conforme à la revendication 1, **caractérisé en ce que** la quantité d'acides $\alpha,\beta$-insaturés présente dans le mélange de monomères utilisé dans la première étape représente de 0 à 15 % du poids de ce mélange.

**9.** Procédé conforme à la revendication précédente, **caractérisé en ce que** la quantité d'acides $\alpha,\beta$-insaturés présente dans le mélange de monomères utilisé dans la première étape représente de 3 à 8 % du poids de ce mélange.

**10.** Procédé conforme à la revendication 1, **caractérisé en ce que** le taux de conversion des monomères chargés pour la première étape vaut de 70 à 100 %.

**11.** Procédé conforme à la revendication 10, **caractérisé en ce que** le taux de conversion des monomères chargés pour la première étape vaut de 85 à 95 %.

**12.** Procédé conforme à la revendication 1, **caractérisé en ce que,** avant la deuxième étape, on fait gonfler les particules de polymère ou de copolymère en ajoutant une fraction, valant jusqu'à 10 % en poids, du mélange de monomères chargés pour la deuxième étape.

**13.** Procédé conforme à la revendication 1, **caractérisé en ce que,** lors de la deuxième étape, la température vaut de 5 à 30 °C.

**14.** Procédé conforme à la revendication 13, **caractérisé en ce que,** lors la deuxième étape, la température vaut de 7 à 25 °C.

**15.** Procédé conforme à la revendication 1, **caractérisé en ce que** la proportion de monomère chloroprène vaut de 5 à 10 % en poids.

**16.** Procédé conforme à la revendication 1, **caractérisé en ce que** la teneur du polymère final en poly(acides + esters $\alpha,\beta$-insaturés) vaut de 10 à 30 % en poids et sa teneur en gel vaut moins de 10 %.

**17.** Procédé conforme à la revendication 1, **caractérisé en ce que** le nombre de particules présentes à la fin de la deuxième étape diffère d'au maximum 20 %, en plus ou en moins, du nombre de particules présentes au début de la deuxième étape.

**18.** Procédé conforme à la revendication 1, **caractérisé en ce que** les acides et/ou esters $\alpha,\beta$-insaturés sont choisis parmi du méthacrylate de méthyle, de l'acrylate de butyle et de l'acide méthacrylique.

**19.** Procédé conforme à la revendication 1, **caractérisé en ce que** le ou les tensioactifs employés pour la deuxième étape est ou sont choisi(s) parmi les tensioactifs non-ioniques.

**REFERENCES CITED IN THE DESCRIPTION**

**Patent documents cited in the description**

- US 5399625 A
- US 6034173 A
- US 2000 A
- EP 495365 A
- EP 1992 A